(19) **Europäisches Patentamt**
**European Patent Office**
**Office européen des brevets**

(11) **EP 2 134 034 A1**

(12) **EUROPEAN PATENT APPLICATION**

(43) Date of publication:
**16.12.2009 Bulletin 2009/51**

(51) Int Cl.:
***H04L 12/56*** (2006.01) ***H04W 84/18*** (2009.01)
***H04W 8/00*** (2009.01)

(21) Application number: **08157966.6**

(22) Date of filing: **10.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Fujitsu Limited**
**Kawasaki-shi, Kanagawa 211-8588 (JP)**

(72) Inventor: **Abedi, Saied**
**Reading,**
**Berkshire RG1 4LS (GB)**

(74) Representative: **Stebbing, Timothy Charles**
**Haseltine Lake LLP**
**Lincoln House, 5th Floor**
**300 High Holborn**
**London WC1V 7JH (GB)**

(54) **Improvements in wireless sensor networks**

(57) A wireless sensor network having mobile sensors (64, 65) is provided with a fixed grid of potential sinks, one of which (70) is currently active as the network sink. To re-position the sink, the current sink (70) finds candidate sinks (72-79) among the nearby potential sinks and requests from them a measure of their suitability to act as the future sink. To do this, the candidate sinks (72-79) obtain data and/or signals from the sensors (64, 65) within their range to estimate a total throughput which they would expect to achieve if acting as the sink. In one embodiment the desired data rates of the sensors (64, 65) are also taken into account. The current sink (70) then transfers the role of active sink to the most suitable candidate (e.g. 76) thus found.

*Fig.4*

EP 2 134 034 A1

**Description**

The present invention relates to wireless sensor networks and more particularly to sink (base station) positioning in such networks.

Recently, the concept of the wireless sensor network (WSN) has received considerable attention. A WSN typically includes a collection of low-power transceivers (henceforth called sensors) each having some kind of sensor function for one or more properties of an environment in which they are placed. The term "environment" here has a very broad meaning and could include, for example:- a geographical area such as a farmer's field, an area of ground requiring monitoring for security reasons, or a volcano; a specific facility such as an industrial plant, a hospital, a retail store or financial institution; or a human body. Likewise, the range of properties which might be sensed is wide, including temperature, pressure, sound, vibration, motion, the presence of specific chemicals, etc.

Each sensor is capable of transmitting sensor data, usually as discrete packets, to any other devices in its vicinity, usually to another sensor. By relaying data from one sensor to another, the sensed data can be directed to a so-called sink or base station and gathered (temporarily stored). Although the precise communication standard used by the sensors is not important, one suitable standard is IEEE802.15.4, a current implementation of which is called ZigBee.

Depending upon the capabilities of the sink, the data can be forwarded from the sink directly or indirectly to some form of outside entity, typically via another network such as a mobile telephone network or the Internet. Where the sink is able to communicate with another network it can also be called a gateway (GW).

In some implementations, the terms sink, base station and gateway mean the same thing; in others they denote distinct functions, in which case the sink will communicate the gathered data to a separate base station and/or gateway for further transmission, possibly after some kind of aggregation or other processing.

Moreover, in some implementations, the sensors (or a subset thereof) are also capable of acting as the sink. Multiple sinks, and multiple gateways, may be present in a WSN but for simplicity, a single sink is assumed in the following description.

In the present specification, the terms "sink" and "base station" are used synonymously to denote any kind of data-gathering entity in a wireless sensor network whether or not it also acts as a gateway.

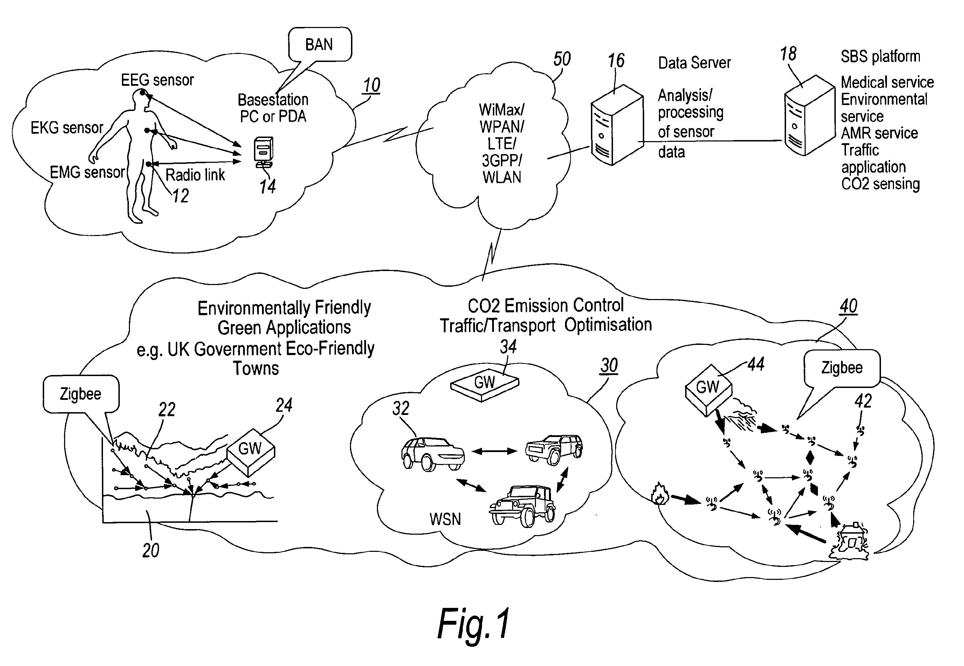

Some possible applications of WSNs are shown in Figure 1. A WSN applied to the human body is called a Body Area Network (BAN), as indicated at 10 in the upper part of Fig. 1. In this instance, the sensors 12 might monitor body functions such as heartbeat and blood pressure, and transmit their data to a sink 14 in the form of a portable computing apparatus such as a mobile phone, PC or PDA. As indicated this would normally have a wireless link, via another network 50, to an external data server 16 for analysis and forwarding on, if necessary, to a data centre ("SBS Platform") 18, allowing decisions to be taken based on the sensed data. For example, changes in the heartbeat of a hospital patient might lead to a decision to signal medical staff to attend to the patient.

The left-hand lower part of Figure 1 depicts a WSN 20 applied to a geographical area, for example to monitor environmental conditions such as air quality. Such a WSN is also termed an Environment Sensor Network or ESN. By being scattered over a geographical area, the sensors 22 are essentially fixed in this application. As indicated, the sensors might communicate using the above-mentioned Zigbee standard with the data being route to a gateway GW 24 for further transmission over network 50.

Next to this in Fig.1 is indicated another form of WSN 30 in which the nodes are sensors on board vehicles 32, and are thus mobile. In this case the sink is provided in the form of a gateway 34 which might be fixed to a mast at a traffic intersection for example, or might itself be mobile by mounting it on another vehicle. Again, monitoring of pollution is one possible application. Although not shown in Figure 1, each individual vehicle 32 may also have its own WSN formed by sensors at various points in and on the vehicle, for monitoring parameters such as speed, temperature, tyre pressure and so forth. Such a WSN is an example of an Object Sensor Network or OSN.

The lower right-hand part of the Figure indicates a WSN 40 for assisting with disaster prediction, recovery, or prevention. As before, sensors 42 are scattered around a geographical area to be monitored, with a gateway 44 acting as the sink for receiving the sensor data and forwarding the same over network 50 to server 16. By raising alarms in response to sensor data from buildings, the ground or the atmosphere, rescue operations can be started more quickly to deal with earthquakes, fire or flooding. Compared to conventional monitoring networks, WSNs are cheaper to deploy and at the same time they provide more powerful and accurate real-time tools to acquire the data.

As will be apparent from Figure 1, in general the sensors of a wireless sensor network may be fixed or mobile, and the sink may be fixed or mobile. However, the present invention concerns a WSN in which at least some of the sensors are mobile and the sink is fixed, though capable of being relocated in the manner to be described later.

Commonly, the sensors are unattended devices of low computational ability and reliant on battery power; thus, power consumption of sensors is a major consideration. Transmission of data is typically the most power-hungry function of a sensor. For this reason, it is preferable for a sensor to communicate only with its nearest neighbours, necessitating the use of multi-hop techniques to enable data to reach the sink by several different routes. Another technique employed to conserve battery power is to deactivate sensors which are not currently engaged in sensing or communication (including relaying). Thus, sensors may alternate between active and inactive states (also called "awake" and "asleep"), for example in response to the presence or absence of a sensed property or incoming data. In this way the useful lifetime of the sensor can be prolonged. However, unless a sensor has some way to replenish its power, its battery will eventually become exhausted, at which point it assumes a "dead" state. Dead sensors reduce the coverage of the network and restrict the number of available routes for data, to the point where in the worst case, the WSN is no longer operable. Consequently, related to the need to conserve battery power of sensors is the desire to keep each sensor "alive" for as long as possible. This is particularly challenging when the sensors are moving, for example as a result of being mounted on a vehicle or a human body.

As will be apparent from the above discussion, it is possible to define one of a limited number of states for each sensor at a given point in time. The sensor may be "active", in the sense of transmitting its own sensed data; it may be acting as a relay (this is distinguished from "active" for present purposes); it may be "inactive" due to not having any data to transmit or relay; or it may be dead. The concept of the "state" of a sensor is important for managing the network, as explained in more detail below.

Another consideration, of particular relevance to the present invention, is appropriate positioning of the sink. Generally, the sensors transmit data in all directions indiscriminately without knowing or caring which other nodes receive it. A sink far from the more active part(s) of a wireless sensor network will tend to receive less data, with greater delay (latency), and incur more power expenditure by the sensors, than one placed closer to the action. In a sparse WSN (one having relatively few sensors for the geographical area covered), some positions of the sink may not allow the sink to communicate with all parts of the WSN. Conversely, in a dense WSN it is generally no problem for all sensors to reach the sink, but those sensors closest to the sink will tend to suffer high power drain owing to the large demands on them for relaying sensor data to the sink. This will tend to drain the available power in a short time if the sink stays still. Thus, it is unlikely that a fixed sink will remain optimally positioned for any length of time. By its nature, a wireless sensor network has a constantly-changing configuration, owing to changes of state of the sensors, their movements if any, and changes in the property or properties being sensed, so the appropriate position for the sink is liable to change frequently, possibly over quite short timescales.

In one form of wireless sensor network, the sensors are RFID-based devices which might not be reliant on a battery power, but as the available transmission power of such devices is very low, similar considerations still apply regarding placement of the sink.

Thus, dynamic repositioning of the sink in a wireless sensor network has been proposed as a technique for increasing sensor lifetime whilst improving the quality and throughput of communications over the WSN while reducing the potential delays.

Unfortunately, it has been shown that the problem of sink positioning in a WSN is an "NP-complete" problem and thus difficult to solve with the very limited computing resources available in the WSN. Moreover, physically moving the sink is only feasible for some WSN applications. Even in a system configuration which allows for the sink to be mobile, for example by mounting it on a vehicle or robot, such physical movement of the sink tends to be inherently slow and unreliable.

Accordingly, it is desirable to find a solution for sink positioning in a WSN which does not require actual movement of the sink.

It is further desirable to provide a technique for sink positioning which takes account of the needs of the sensors in terms of data to be transmitted.

According to a first aspect of the present invention, there is provided a method of locating a sink in a wireless sensor network, the wireless sensor network comprising sensors for transmitting sensor data and an array of potential sinks one of which is active as the current sink in the network for receiving the sensor data, the method comprising:

> selecting two or more of said potential sinks as candidate sinks;
> finding the suitability of each candidate sink to act as the sink using a calculation producing a result indicating the suitability of the candidate sink for communication with a plurality of the sensors;
> comparing the result for each candidate sink to determine the most suitable candidate sink; and
> transferring the role of the current sink to the most suitable candidate sink thus found.

Here, the two or more potential sinks selected in the selecting step can include the current sink itself. Thus, it is possible that the transferring step does not involve any change, if it is found that the current sink is the best candidate. The "array" of potential sinks is preferably a regular two-dimensional array such as a grid which covers a geographical area occupied by the WSN. The potential sinks need not have any function as sensors themselves but should be capable of wireless communication at least with sensors nearby, and preferably also with each other. Alternatively, the potential sinks may be linked to each other by a wired network.

In this method, preferably, the selecting step is carried out by the current sink; the finding step is carried out by each candidate sink; the comparing step is carried out by the current sink; and the transferring step is carried out by the current sink.

Usually, the potential and current sinks will each have a limited range for wireless communication, in which case the selecting step selects potential sinks within range of the current sink. Preferably, this is done by the current sink sending a signal to each of the potential sinks within reception range of the current sink. Such a signal may act to "wake up" potential sinks if these are currently in an inactive state.

Preferably, the method is initiated by the current sink in response to a predetermined trigger event including at least one of: a change in an amount of data received by the current sink, and elapse of a defined time interval.

In the above method, preferably, the finding step comprises: each candidate sink transmitting a message to sensors within its range; the sensors within range sending data and/or signals to the candidate sink; and the candidate sink performing the calculation based on the data and/or signals from the sensors within range.

Here, the data and/or signals preferably comprise a reference signal which the sensor sends to assist the potential sink in estimating a channel between the sensor and the potential sink. The data may include the position of the sensor. Where each sensor is capable of being in one of a number of predefined states such as active, inactive or relay, the data may also include the sensor state.

In one embodiment of the present invention the potential sink determines a transmission rate achievable from each sensor by estimating the channel and taking into account the location and/or state of the sensor. This may be followed by calculating a total transmission rate for all active and relay sensors within its range, and sending the result to the current sink, the current sink then comparing the results of this calculation for each candidate sink. That is, the current sink may find the potential sink for which the achievable throughput is a maximum, based on the total transmission rates.

In another embodiment of the present invention the data further includes desired rate information, in other words an indication of a transmission rate with which the sensor is capable to send data to the sink. Then, the potential sink determines its suitability by taking into account the extent to which it could satisfy the desired rate of each sensor. More specifically, this may include the potential sink calculating a probability that the transmission rate from a sensor will fall below the desired rate owing to limitations of the channel between them. It may further include the potential sink calculating a so-called distance (or shortfall) related to this probability for each sensor, and a total distance for all the sensors within range. This total distance is then transmitted to the current sink, and becomes the result compared in the comparing step to determine the most suitable potential sink.

In this embodiment, preferably, each sensor obtains the desired rate information on the basis of amounts of data to be transmitted and energy available to the sensor. For example, a look-up table may be stored by each sensor to provide desired rate information corresponding to different amounts of data and energy. Here, "energy" may be the remaining battery capacity of a battery-powered sensor.

In either case, the determination of the most suitable candidate is preferably followed, in the transferring step, by the current sink handing over the role of active sink by notifying the most suitable candidate, which then assumes the role of active sink.

Where a predetermined point in the WSN is provided as a data delivery port, the new sink then finds a route to deliver its data to that delivery port. Preferably, this involves multi-hop communication among potential sinks between the new sink and the delivery port.

Further aspects of the present invention provide a WSN, a sensor, and a device suitable to act as a potential sink for a WSN as defined in the accompanying claims.

The present invention also embraces computer software which, when executed by a processor of a radio device in a wireless sensor network, provides the above sensor and the device suitable to act as a potential sink.

Reference is made, by way of example only, to the accompanying drawings in which:

Figure 1 illustrates some possible applications of wireless sensor networks (WSNs);

Figure 2 shows a relationship between transmission power and sensor energy in a WSN;

Figure 3A shows a typical configuration of a WSN to which the present invention is applied;

Figure 3B is a flowchart of steps in methods embodying the present invention;

Figures 4 to 9 show successive steps in a method of a first embodiment of the present invention;

Figures 10A and 10B, and Figures 11A and 11B, show the results of simulations for indicating the effect of the first embodiment; and

Figures 12A and 12B, and Figures 13A and 13B, show the results of simulations for indicating the effect of a second embodiment of the present invention.

Before describing the preferred embodiments of the present invention, a brief explanation will be given of the theoretical background.

We assume that a number of sensors is allocated in a wireless sensor network, and that only one sink or Base Station is available for this WSN. It is also assumed that any sensor may attempt to transmit data packets to the sink. A sensor by definition can act as a transmitter (i.e. *active* sensor), it can be out of action due to the lack of energy in the sensor battery (i.e. dead sensor), it can be *inactive* due to lack of packets, it can act as a *relay* or it can act as a *sink*. Therefore we define the sensor states as:

$$C_i = \begin{bmatrix} c_1 & c_2 & c_3 & c_4 & c_5 \end{bmatrix}$$
$$= [Sink, Inactive, Active, \mathrm{Re}lay, Dead], \quad i = 1,5 \qquad (1)$$

It is assumed that packets are transmitted by the sensors either directly or through relays to the sink. Each communication hop from a sensor to a relay, relay to sink etc. is referred to below as a "link" having a "channel". Each sensor can change its state on an autonomous basis or in harmony with other sensors. Each event is defined as a point of time at which the state of one or more sensors changes.

A communications channel in the WSN is modelled, for example, as follows. Using an equation well known from communication theory, a packet transmission signal between any two sensor nodes, or between a sensor and sink, can be represented by:

$$\mathbf{y}(t) = d^{-\alpha/2}.\mathbf{h}(t).\mathbf{x}(t) + \boldsymbol{\eta}(t) \qquad (2)$$

where $t$ is the current time, $\mathbf{y}(t)$ is the received signal, $d$ is the distance between the sensor nodes, $\alpha$ is the path loss component of the channel, $\mathbf{h}(t)$ is the channel gain describing the fading between the two sensor nodes, $\mathbf{x}(t)$ is the transmitted signal, and $\eta(t)$ is noise. It is assumed that the radio channel is a Rayleigh flat-fading channel, varying randomly anywhere between a perfect channel and no channel at all, which can be expressed as $\mathbf{h}(t) \sim CN(0,1)$. It is assumed that the radio channel remains constant during the packet transmission, but may change over time to a time varying fading channel.

Given a channel $\mathbf{h}(t)$, the maximum rate at which reliable communication is possible at time $t$ is represented as:

$$I(t) = \log\left(1 + \frac{P_x|\mathbf{h}[t]|^2}{d^\alpha N_0}\right) \qquad (3)$$

where the transmission power $P_x$ depends on the energy available at the transmitting sensor. Here, $N_0$ is the standard deviation of the noise component $\eta(t)$. It is assumed that in the current fading environment the maximum rate $I(t)$ for a reliable communication is random as well.

The following simple energy consumption model can be used to describe the instantaneous energy variations in the sensor battery:

$$\varepsilon(t) = \varepsilon_0 - \sum_{m=1}^{t-1} \varepsilon_{c_m} \qquad (4)$$

where $\varepsilon_0$ is the initial energy value, $c_m$ is one of sensor states at time $m$, and $\varepsilon_c$ is the energy expended (consumed) in state c during each time step t. It is assumed that states of sensors change in discrete time steps, and that between successive time steps all conditions remain the same. In the subsequent description, time *t* is the current time (present time step) in the network.

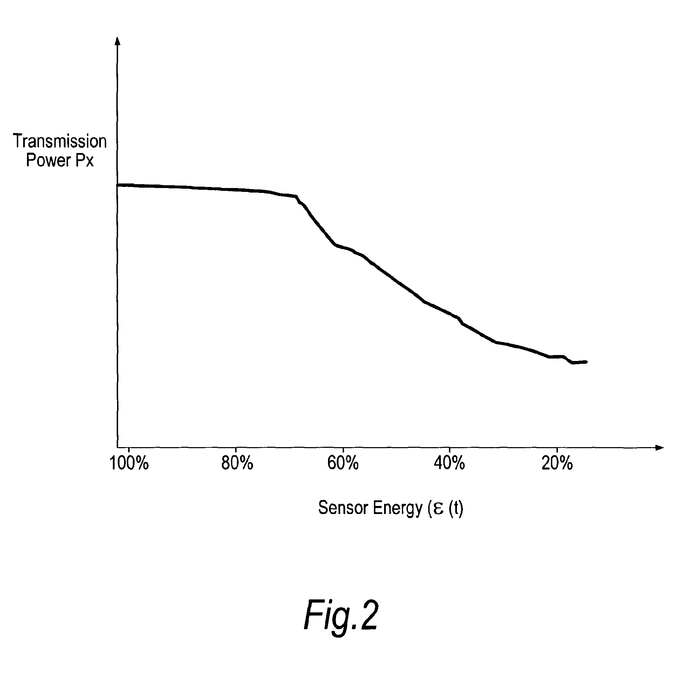

It is assumed that available transmission power $P_x$ is a function of available remaining energy. An example of this relationship is shown in Figure 2, from which it is clear that declining energy leads to declining transmission power.

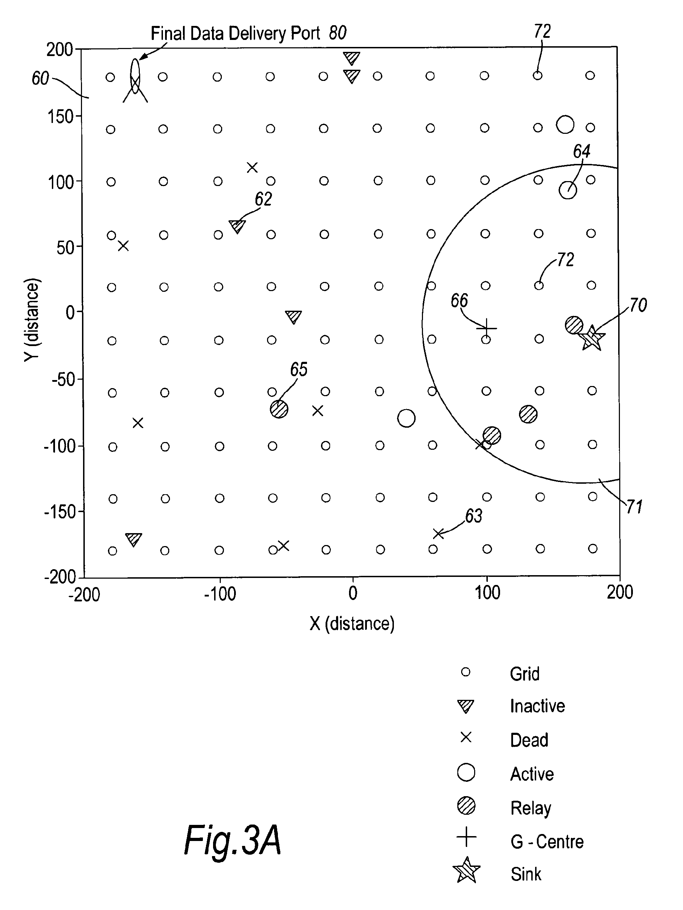

Figure 3A conceptually shows a WSN 60 to which the present invention is applied. The horizontal and vertical axes represent distance (in arbitrary units) over an area covered by the WSN. As indicated, the mobile sensors may be positioned anywhere in the area considered, and in accordance with the possible state referred to above, they include inactive sensors 62, dead sensors 63, active sensors 64 and relay sensors 65. As shown by small open circles 72, a grid of potential sinks is overlaid on top of the network of mobile sensors. It is assumed that at point of time only one grid member is actually active as a sink 70. As indicated in the Figure, the sink 70 will typically only have a limited reception range 71, and thus can only communicate directly with a subset of the sensors and grid points. A point 66 marks the so-called "centre of gravity" of the sensors. This may be calculated, for example, based on the geographical centre of the sensors within range of the sink taking into account the positions of all the currently-active sensors, or may take into account other factors too such as amount of data at each active sensor. Note that owing to the capability for multi-hop communication as referred to above, this does not prevent the sink from gathering information from the whole WSN. It is also assumed that wireless sensor network has a geographically fixed data delivery port 80 to which all the information gathered by sink 70 is delivered.

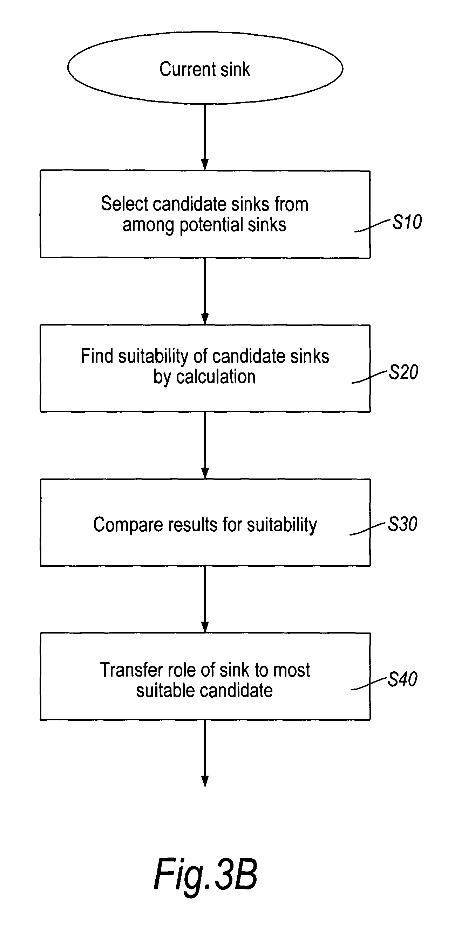

Figure 3B is a flowchart of essential steps in a method embodying the present invention. As will be seen, the method proceeds on the assumption that there is a currently-active sink in the network. To transfer the role of sink, first some suitable candidates are selected (step S10) from among some potential sinks. Then (S20) the suitability of each candidate is found by calculation of particular metrics to be described. Then (S30) the results of the calculations are compared to find the best candidate among the potential sinks. Finally (S40) the role of the current sink is transferred to the most suitable candidate thus found.

First Embodiment

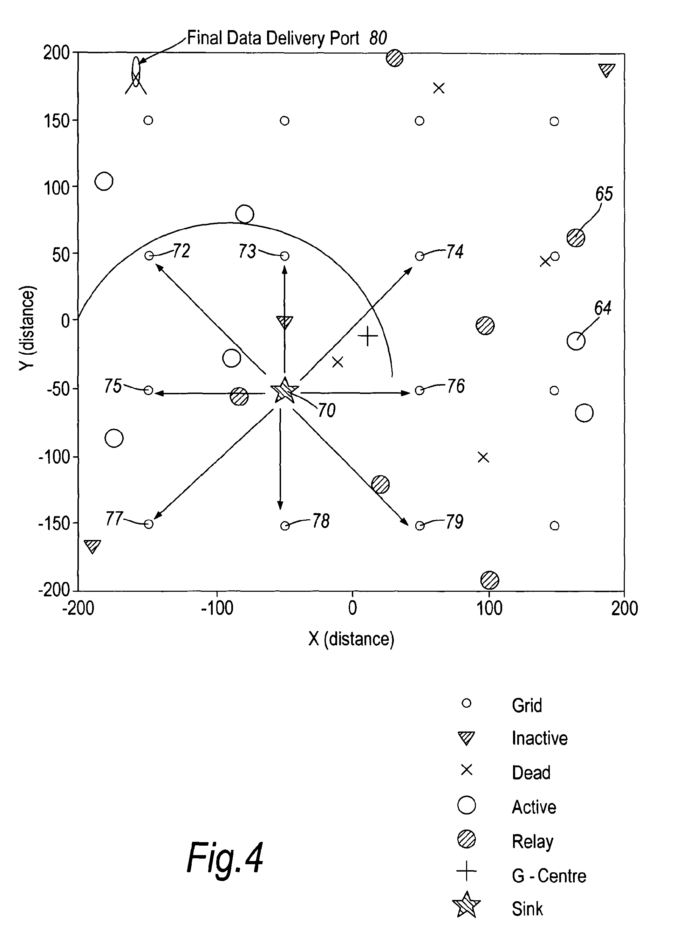

A first embodiment of the present invention will now be described with reference to Figures 4 to 9, showing steps of a sink positioning method. In the embodiments of the present invention, the sink 70 can be considered as a "virtual" sink, since the above-mentioned grid of sinks is adopted in which one grid point at a time acts as the sink.

The first embodiment takes into account changes of the maximum transmission rate $\mathbf{I}(t)$ for different communication links from sensor to sink, which changes occur due to movements of sensors and their changes of status as well as (possibly) changes in ambient conditions.

The virtual sink positioning is assumed to be performed on a time-step basis as mentioned above.

First, it is assumed that one potential sink is already acting as the sink 70. To begin with (when the system first starts operating), it may be convenient to chose a potential sink at a central point (relative to the WSN coverage area) as the initial active sink. Alternatively, any arbitrary potential sink could be used initially, perhaps by "waking up" all potential grid points and determining which can currently see the most data being transmitted by the sensors. Thereafter, the sink can be repositioned as desired using the method to be described.

The method of the present invention has to be triggered in some way. The trigger for the following steps may be provided by the current sink 70 observing a significant reduction in data it receives (for example, the amount of data per unit time falling below a predetermined threshold). The cause of such a reduction might be, for example, failure of a nearby sensor/relay, but the sink would not normally know this directly. A steady or increasing data throughput to the sink would not normally be a trigger for performing the method. However, the method could be triggered periodically regardless of the incoming data, to check whether the current sink positioning is appropriate.

1. The basic assumption is that each grid point (i.e. potential sink) has its own reception range, and is aware of the other grid points within range. The current grid point which is acting as the sink 70 sends a signal to all the other grid nodes within the reception range, alerting them to be ready to act as a potential future sink as shown in Figure 4. (Figure 4 only shows the reception range of sink 70 approximately; let us assume that sink 70 can reach all of potential sink nodes 72 to 79). At its simplest, this step simply requires the sink 70 to broadcast a signal at a frequency capable of being received by any potential sink within the transmission range. Reception of the signal may be arranged to "wake up" the potential sinks from a sleep state.

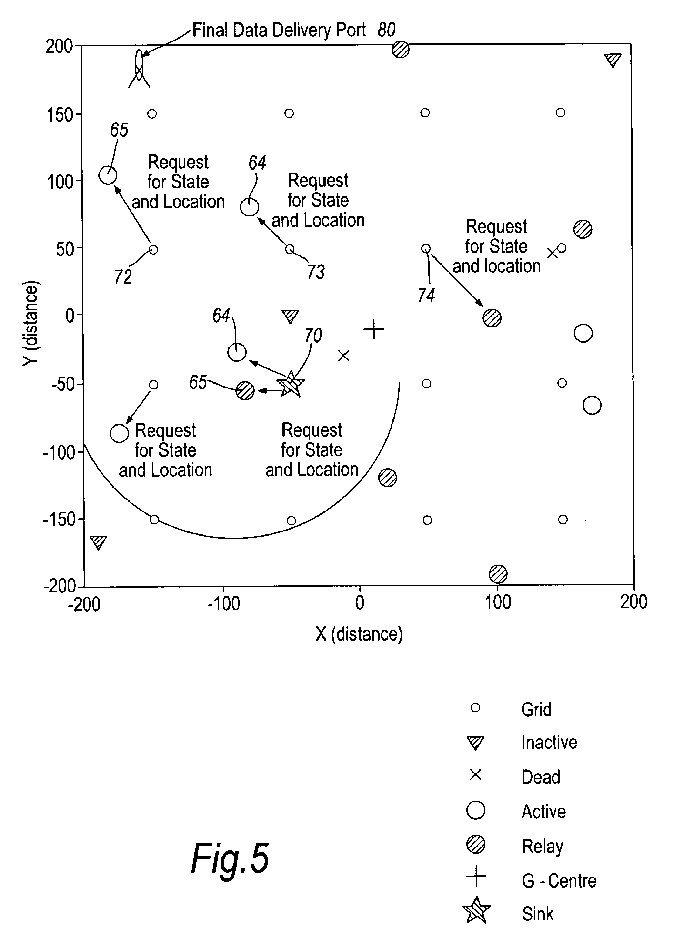

2. Each candidate grid point (including current sink 70) as shown in Figure 5 asks the sensors in range to send their current location and state (e.g. active, relay) back to the grid point. Obviously, "dead" sensors would not participate in this process, and normally, nor would "inactive" (sleeping) sensors.

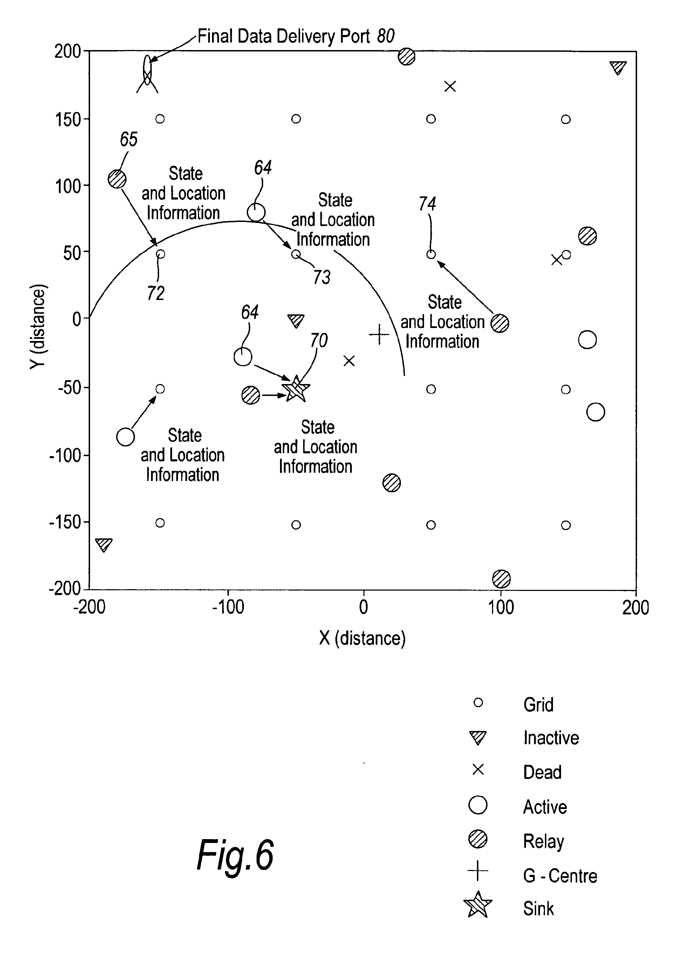

3. Each potential future sink then receives the state and location information as shown in Figure 6, and identifies approximately which sensors are currently within its reception range. In other words the potential sink stores some form of representation of the sensor network in its neighbourhood, identifying sensors by their location and recording the state of each.

4. Each candidate grid point asks the sensors in range to send a reference signal which will be employed to determine or estimate the channel information $\mathbf{h}_{sx}(t)$ between the sink and each sensor node $x$.

5. Each candidate grid point then determines the maximum rate at which reliable communication is possible at time $t$ between the grid point at potential location $j$ and each relay or active sensor node $i$ as:

$$I_{ji}(t) = \log\left(1 + \frac{P_i\left|\mathbf{h}_{ji}[t]\right|^2}{d_{ji}^{\alpha}N_0}\right) \qquad (5)$$

where $P_i$ is the transmission power allocated to each sensor node whose value can be, for example, the same for each sensor or a randomly assigned transmission power value using a Gaussian codebook, and $d_{ji}$ is the distance between the candidate grid point and the sensor, this being calculated by the candidate grid point taking into account available location information of the sensors.

6. The candidate grid point then determines the total maximum rate for current active and relay links associated with it:

$$I_j(t) = \sum_{i=1}^{K}\left(I_{ji}(t)\right) = \sum_{i=1}^{K}\left(\log\left(1 + \frac{P_i\left|\mathbf{h}_{ji}[t]\right|^2}{d_{ji}^{\alpha}N_0}\right)\right) \qquad (6)$$

where K is the number of active relay and sensor nodes within range of the candidate grid point.

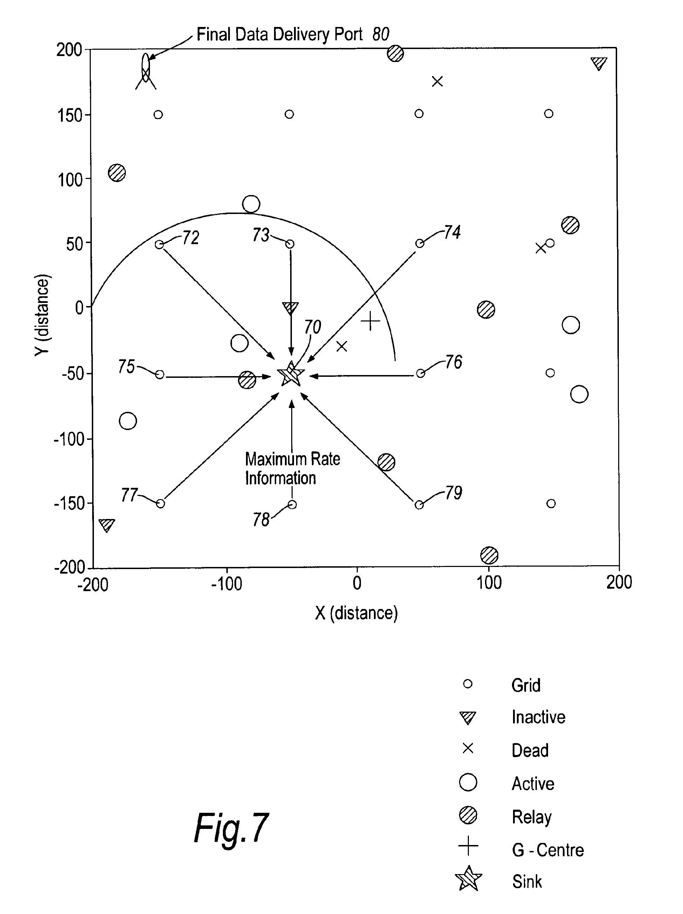

7. All the candidate grid points signal an indication of the transmission rate $I_j(t)$ to the current sink 70 as shown in Figure 7.

8. Current sink 70 then determines the candidate that can provide the maximum achievable throughput:

$$J(t) = \arg\max_{j} \ (I_j(t)) \qquad (7)$$

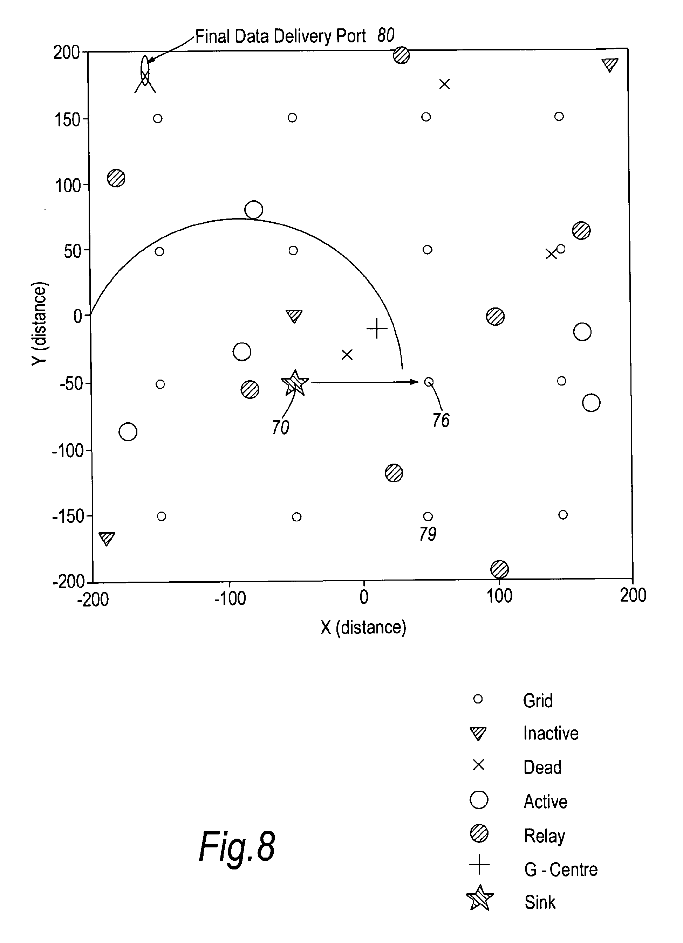

9. Current sink 70 then informs the thus-determined grid candidate that it is selected as the future sink or base station as shown in Figure 8.

10. The informed sink then assumes its duties as the new sink 70 or the new active base station.

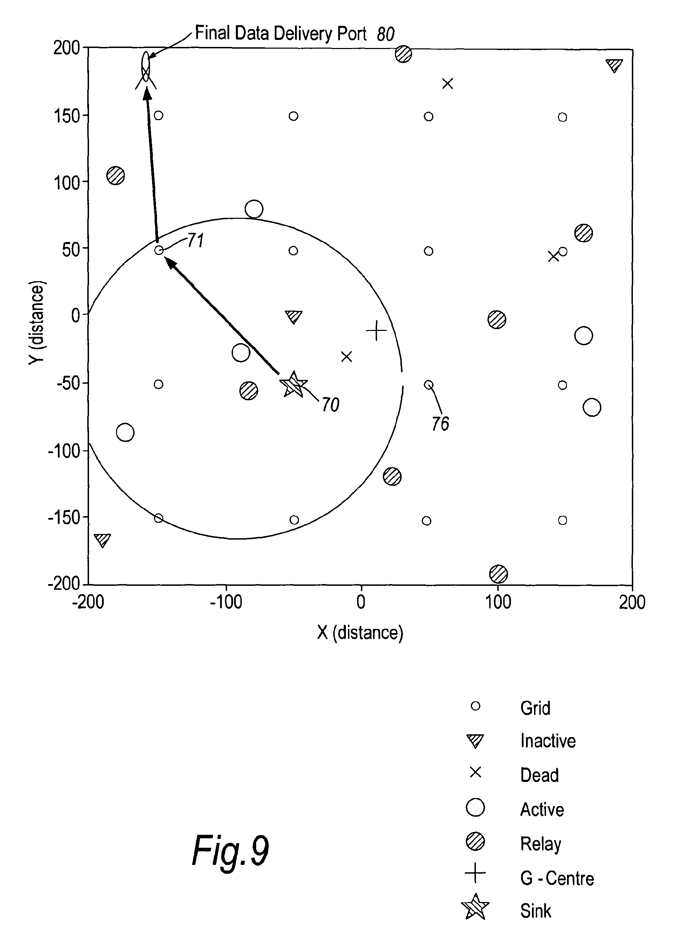

11. The new sink will need to direct its data to the delivery port. To do this, it chooses the closest or most direct route on the grid (predefined) and ask the grid members along the route to act as relays, as shown in Figure 9.

12. Operation of the network then proceeds with the new sink gathering the sensor data and routing the same to the delivery port, until a trigger event occurs or a predetermined time elapses to cause the algorithm to begin again.

As will be apparent from the above, the result is that the sink 70 moves from its current position to a nearby grid point. Over time, the sink can migrate far from its original position to adapt to changes in the network, for example as "hot spots" of activity arise in particular parts of the coverage area.

To test the effectiveness of the above algorithm, simulations have been performed on a periodic event basis, in other words assuming that events take place at fixed time points and that between these time points everything stays the same. The parameters for the simulation (in arbitrary length units) are shown in Table 1. It is assumed that sensors move around and/or change state randomly.

Table 1 Simulation Parameters

| Parameters | Value |
| --- | --- |
| **Dimensions** | 400x400 |
| **Transmission Range** | **30** |
| **Reception Range (Sink)** | **120** |
| **Grid Size** | **10x10** |

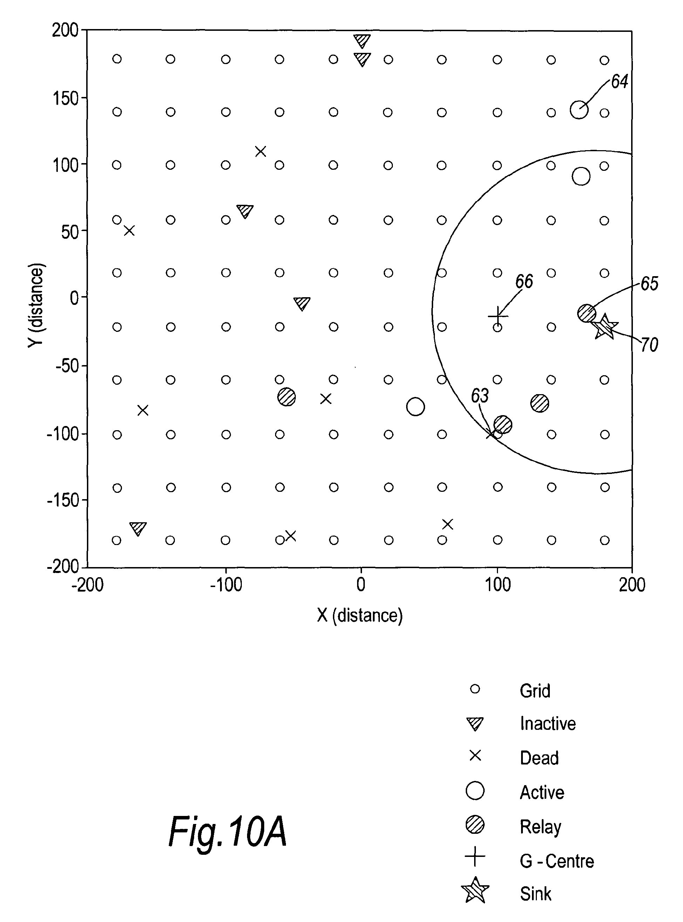

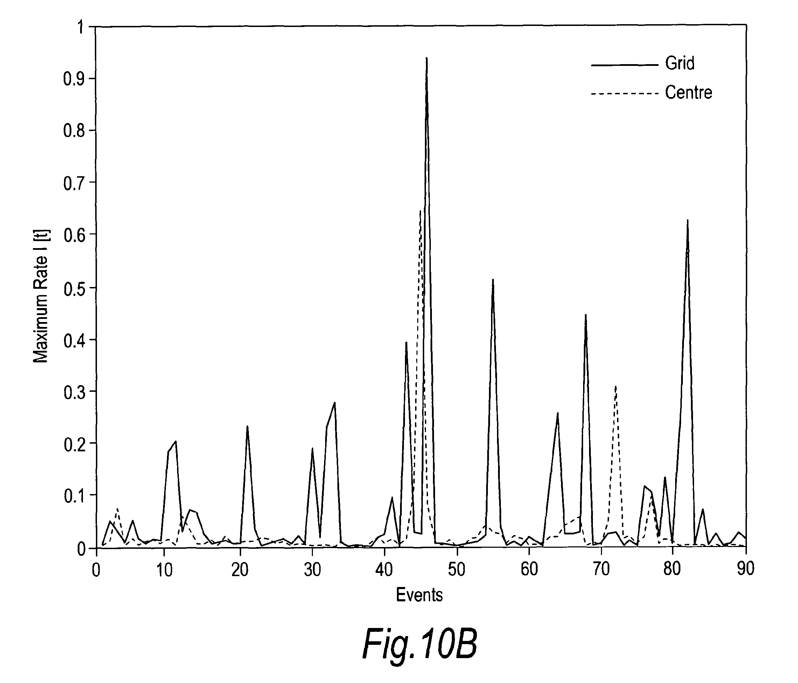

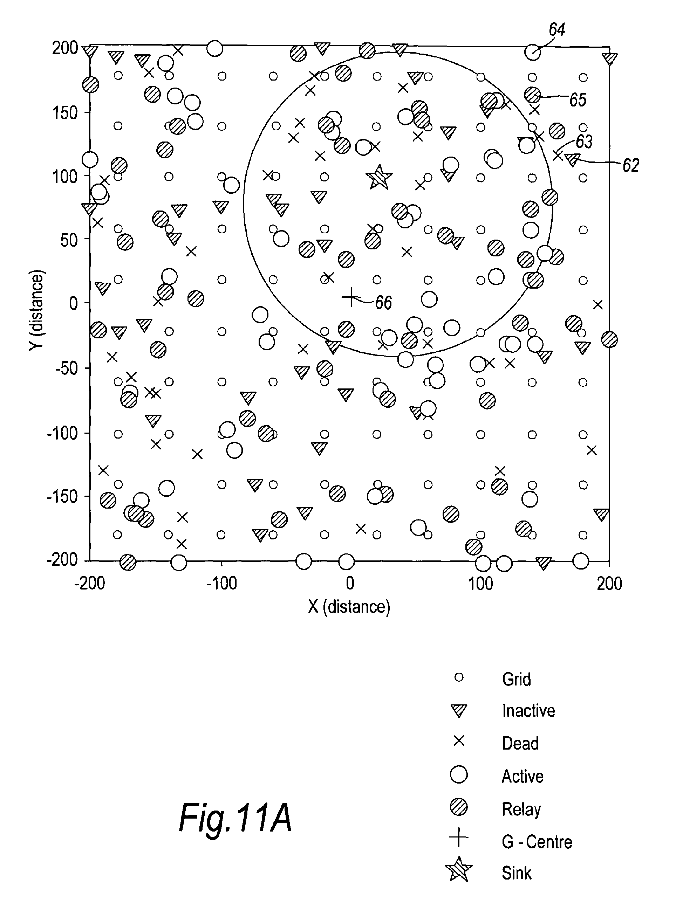

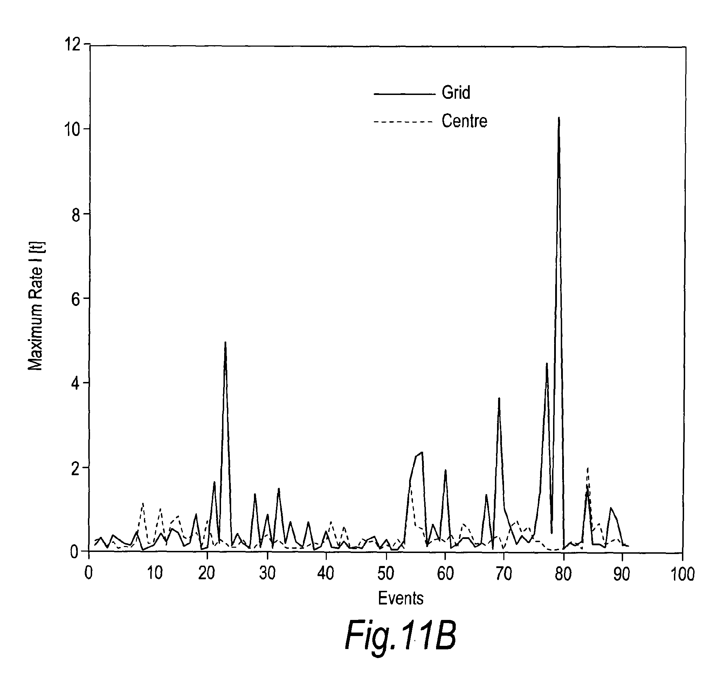

The result presented in Figures 10A, 10B, 11A and 11B is the outcome of 10000 trials for different sensor states. Figures 10A and 10B show the results for a sparse network of only 20 sensors. The performance is compared to the case when only one base station is located at the geometric centre of the WSN area. It can be seen that compared to a fixed base station in the centre of gravity, the grid approach provides significant improvement in terms of maximum achievable rate. Over time, as operation of the system proceeds, this will translate into a throughput and delay advantage in a practical system.

Figures 11A and 11B show the performance results for a dense network in which 200 sensors are present in the WSN.

It can be seen that compared to a fixed base station in the centre of gravity of the WSN, the proposed grid based approach provides significant improvement in terms of maximum achievable rate.

Second Embodiment

The second embodiment takes account of the needs of the sensors more completely by introducing the concept of a "desired rate" for transmission by each sensor. Each sensor's desired rate depends on its remaining energy (see Figure 2 again) and the amount of data the sensor needs to transmit.

As in the first embodiment it is assumed that in the current fading environment, the maximum rate $I(t)$ for a reliable communication is random. Assuming that the code length is sufficiently high, the probability that the information transmitted over channel h(t) falls below a normalised data rate R can be expressed as:

$$P\big(I(t) < R\big) = \boldsymbol{P}\left( |h(t)|^2 < \frac{(2^R - 1)N_0}{P_a d^{-\alpha}} \right) \qquad (8)$$

Each sensor employs a simple look-up table which shows the normalised amount of packet data remaining in the sensor's buffer versus the sensor energy as shown in Table 1. These two values are mapped to a unique desired rate R. The "desired rate" is a transmission rate from the sensor to the sink which is appropriate bearing in mind the amount of data held by the sensor (whether sensed itself, or received as a relay node), and the battery capacity remaining in the sensor.

Table 2 Table for obtaining sensor normalised maximum transmission rate employing data buffered in the sink and remaining energy

| data $\varepsilon(t)$ | 0.1 | 0.2 | 0.3 | 0.4 | 0.5 | 0.6 | 0.7 | 0.8 | 0.9 | 1.0 |
|---|---|---|---|---|---|---|---|---|---|---|
| 20% | 0.01 | 0.02 | 0.04 | 0.15 | 0.25 | 0.35 | 0.55 | 0.75 | 0.9 | 1.0 |
| 40% | 0.1 | 0.15 | 0.18 | 0.22 | 0.33 | 0.45 | 0.65 | 0.85 | 0.95 | 1.0 |
| 60% | 0.2 | 0.25 | 0.30 | 0.35 | 0.45 | 0.55 | 0.75 | 0.95 | 1.0 | 1.0 |
| 80% | 0.4 | 0.55 | 0.65 | 0.78 | 0.85 | 0.95 | 1.0 | 1.0 | 1.0 | 1.0 |
| 100% | 0.5 | 0.6 | 0.75 | 0.85 | 0.95 | 1.0 | 1.0 | 1.0 | 1.0 | 1.0 |

The method proceeds in basically the same way as the first embodiment but the steps will be enumerated again with the differences noted.

1. The current grid point which is acting as sink 70 sends a signal to all the other grid nodes 72 to 79 within the reception range to be ready to act as a potential future sink as shown in Figure 4.

2. Each candidate grid point (including current sink 70) as shown in Figure 4 asks the sensors in range to send their current location, state and, additionally in this embodiment, their desired rate to the grid point. Thus, for example, candidate grid point 72 sends a request to a relay sensor 65, grid point 73 transmits to an active sensor 64, and so on. Inactive or dead sensors do not take part in this process.

3. Each sensor 64 or 65 that receives the signal, based on Table 1 and considering its own buffer occupancy and its own remaining battery energy, estimates the maximum desired rate R. This is a difference from the first embodiment in which the sensor is not required to find its desired rate.

4. Each potential future sink then receives a response from nearby sensors, as shown in Figure 6; the difference compared with the first embodiment is that now the state, location and rate information are all received.

5. As in the first embodiment each candidate grid point 72, 73 and so on asks sensors to send a reference signal which will be employed to determine or estimate the channel information $\mathbf{h}_{sx}(t)$ between itself and each sensor node $x$.

6. Each candidate grid point then determines the mathematical "distance" related to the probability in equation (8) at time $t$ between a sink at potential location $j$ and each relay or active sensor node i as the difference between two metrics, as follows:

$$\omega_{ij}(t) = \frac{(2^{R_i}-1)N_0}{P_x d_{ji}^{-\alpha}} - \left|h_{ji}(t)\right|^2 \qquad (9)$$

Thus, the above "distance" is the amount by which the candidate grid point is likely to fall short of meeting the desired rate of each sensor 64 or 65, and not a geographical distance.

7. The candidate grid point then determines the total distance for current active and relay links associated with it:

$$\omega_j(t) = \sum_{i=1}^{K} \omega_{ij}(t) = \sum_{i=1}^{K} \left( \frac{(2^{R_i} - 1)N_0}{P_x d_{ji}^{-\alpha}} - \left| h_{ji}(t) \right|^2 \right)$$

( 10 )

where K is the number of active relay and sensor nodes in range of the candidate grid point.

8. All the candidate grid points signal an indication of the $\omega_j(t)$ to the current sink 70 in a similar manner to that shown in Figure 7.

9. Current sink 70 then determines the candidate grid point, for example 76, that can provide the minimum overall distance (i.e. maximum achievable throughput):

$$J(t) = \arg\min_j \quad (\omega_j(t))$$

( 11 )

10. Current sink 70 then informs the selected grid candidate 76 that it is selected as the future sink or base station as shown in Figure 7.

11. The informed candidate grid point 76 then assumes its duties as the new sink 70, in other words the new active base station.

12. The new sink then chooses the closest route (predefined) and asks the grid members within the route to act as relays to get connected to the data delivery port 80, as indicated (for the existing sink) in Figure 9.
The effectiveness of the above method has been confirmed by performing simulations on a periodic event basis. Parameters for the simulation are shown in Table 2. Again it is assumed that sensors are moving around, switching between active/inactive states, at random at discrete time points.

Table 3 Simulation Parameters

| Parameters | Value |
|---|---|
| **Dimensions** | 400x400 |
| **Transmission Range** | **30** |
| **Reception Range (Sink)** | **120** |
| **Grid Size** | **10x10** |

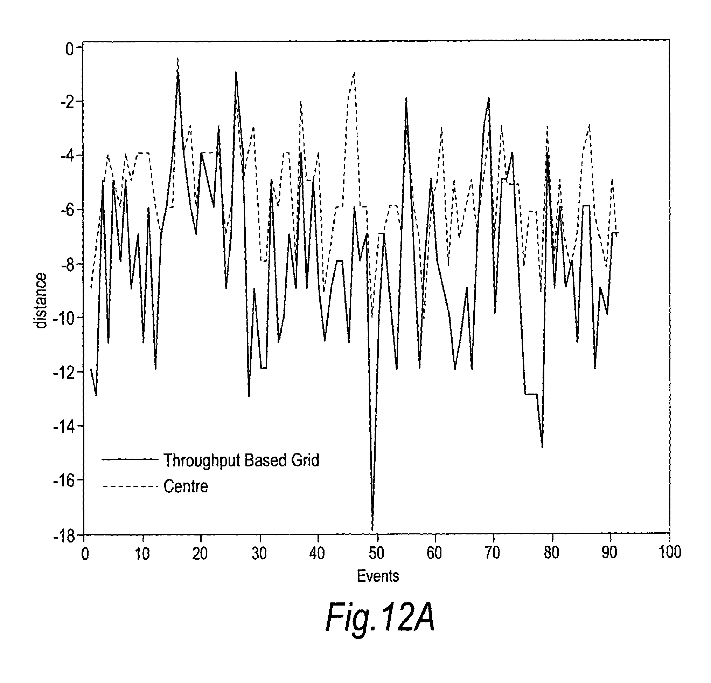

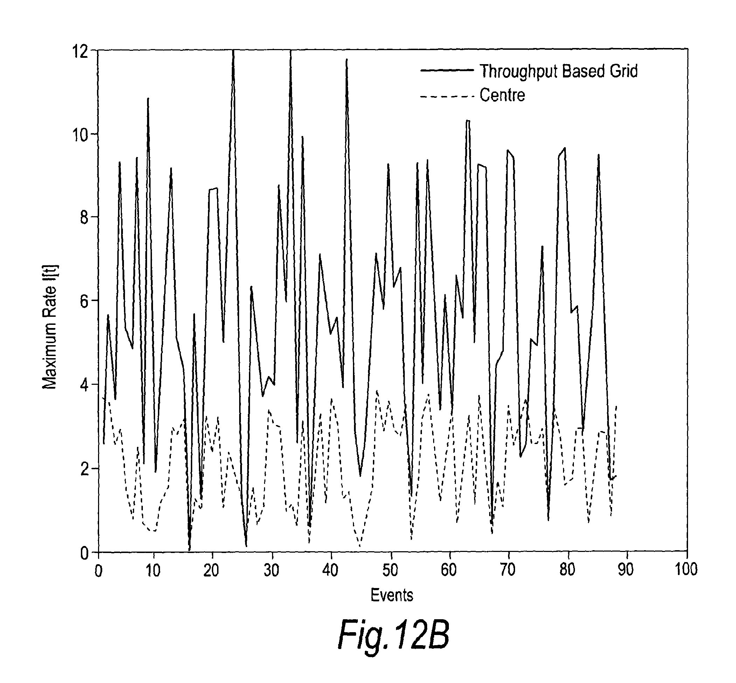

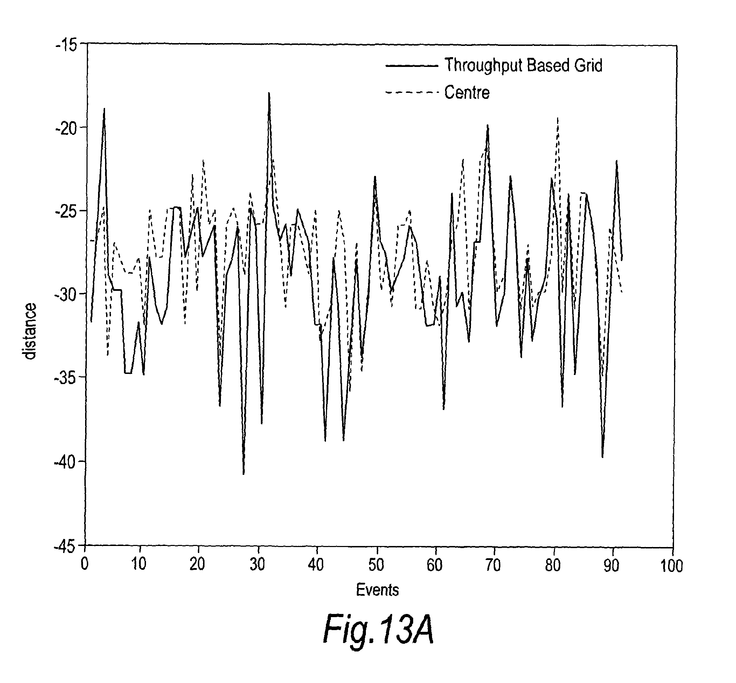

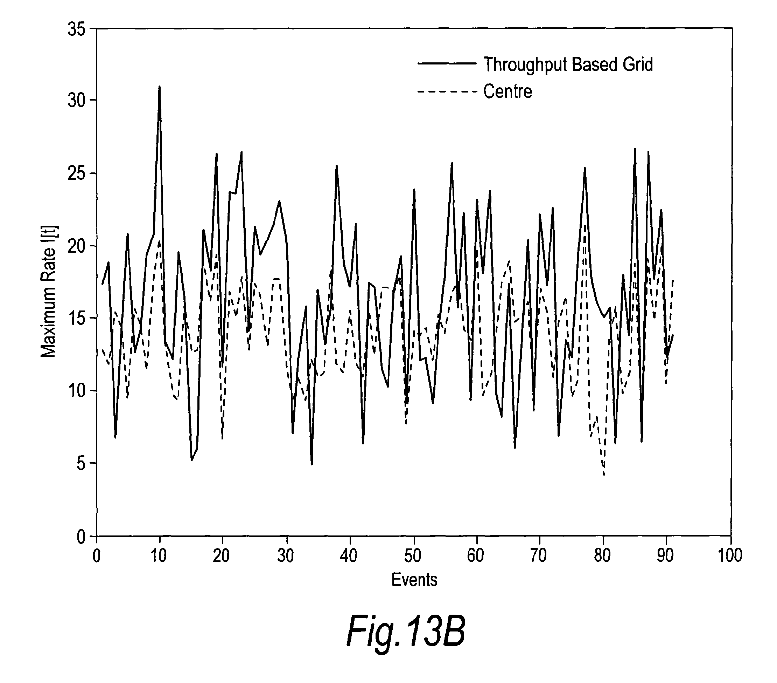

The result presented in Figures 12A, 12B, 13A and 13B is the outcome of 10000 trials (time steps) for different sensor states. The results are shown in two ways: in terms of "distance" (i.e. the probability-related mathematical distance between two metrics as discussed above):- Figures 12A and 13A; and in terms of maximum rate $I(t)$: - Figures 12B and 13B).
Figures 12A/B show the results for 60 sensors. The performance from applying the second embodiment is compared to a simple method in which the sink is located at centre of the WSN area. It can be seen that compared to this simple approach, the grid approach of the second embodiment provides significant improvement in terms of maximum achievable rate. As time elapses and sensors move around/change state, this will eventually translate to a throughput and delay advantage in a practical system. In other words, by identifying the nodes in the network most in need of data delivery and providing the best possible links, the coverage (area in which the maximum efficient amount of data is gathered) can be improved.

Figures 13A/B shows the performance results when 200 sensors (not all active) are present in the WSN, with the same comparative and with similar results.

The above description and simulations have considered as an example a WSN over a square area provided with a regular grid of potential sinks. As will be apparent to those skilled in the art, such a configuration is considered merely for convenience and the present invention can be applied to any shape of WSN as well as to other arrays of potential sinks. The present invention may also be applied to part of a WSN extending over a wider area.

In the above embodiments, the sink routes data to the delivery port by using other grid points as relays. However, this is not essential. It might be arranged that each grid point has the ability to communicate wirelessly or by a separate wired network directly with the delivery port. If the sink can communicate wirelessly with the delivery port, the latter need not always be at a fixed location but could be mobile. The "delivery port" may take the form of a gateway to another network.

In the above description, various calculations have been referred to, for example by the candidate grid points. It may be possible for some or all of such calculations to be replaced by look-up tables along similar lines to that shown in Table 2 for the sensor desired rate. References to "calculating means" in the claims are thus to be interpreted broadly.

Thus, embodiments of the present invention involve the following features:

virtual sink positioning where the actual physical move of sink does not happen but the effect is similar to a sink move;
overlaying the mobile WSN with a grid of fixed sensors where only one of the nodes is active at each time;
dynamic re-positioning of the sink based on the current location of the virtual sink within the grid;
novel signalling between current sink and the candidate sinks;
novel methods to admit the sinks into the candidate set of sinks within the grid;
the concept of routing to a final delivery point; and
novel criteria for selection of the future sink.

The effects of the embodiments include:

improving the throughput in a wireless sensor network;
improving the packet delivery delay in a mobile WSN;
improving the connectivity in dense mobile WSN networks;
improving the connectivity in a sparse WSN network;
improving the sensor life time; and
improving the coverage in a mobile WSN.

To summarise, the present invention provides a technique for "virtual" sink positioning in a WSN, in which the sink is not physically moved, but instead the role of sink is transferred among a grid network of potential sinks "on top" of a network of mobile sensors. To reposition the sink, the current sink (70) finds candidate sinks (72-79) among the nearby potential sinks and requests from them a measure of their suitability to act as the future sink. To do this, the candidate sinks (72-79) obtain data and/or signals from the sensors (64, 65) within their range to estimate a total throughput which they would expect to achieve if acting as the sink. The current sink (70) then transfers the role of active sink to the most suitable candidate (e.g. 76) thus found. In this way it is possible to achieve similar performance to an actual physical movement of the sink. In the second embodiment, sensors are allowed to have their say in future virtual positioning of the sink; this involves providing a capability for the sensor that makes it possible to consider both buffer occupancy and the remaining battery power to come up with the best desired maximum information rate. In effect, the sensors and all the involved grid points make a collective decision on the future location of sink.

**Claims**

1. A method of locating a sink in a wireless sensor network, the wireless sensor network comprising sensors and an array of potential sinks one of which is active as the current sink in the network, the method comprising:

   selecting two or more of said potential sinks as candidate sinks;
   finding the suitability of each candidate sink to act as the sink using a calculation producing a result indicating the suitability of the candidate sink for communication with a plurality of the sensors;
   comparing the result for each candidate sink to determine the most suitable candidate sink; and
   transferring the role of the current sink to the most suitable candidate sink thus found.

2. The method according to claim 1, wherein:

the selecting step is carried out by the current sink;
the finding step is carried out by each candidate sink;
the comparing step is carried out by the current sink; and
the transferring step is carried out by the current sink.

3. The method according to claim 1 or 2 wherein the potential and current sinks each have a limited range for wireless communication and said selecting step selects potential sinks within range of the current sink.

4. The method according to claim 3 wherein the finding step comprises:

each candidate sink transmitting a message to sensors within its range;
the sensors within range sending data and/or signals to the candidate sink; and
the candidate sink performing the calculation based on the data and/or signals from the sensors within range.

5. The method according to claim 4 wherein the data and/or signals comprise a reference signal which the sensor sends to assist the potential sink in estimating a channel between the sensor and the potential sink.

6. The method according to claim 5 wherein the data and/or signals comprise at least one of the location and a state of the sensor, and the potential sink determines a transmission rate achievable from each sensor by estimating the channel and taking into account the location and/or state.

7. The method according to claim 6 wherein the potential sink calculates a total transmission rate for the sensors within its range, and sends the result to the current sink for use in said comparing step.

8. The method according to claim 5, 6 or 7 wherein the data and/or signals comprise desired rate information of the sensor indicating a transmission rate with which the sensor can send data to the potential sink, and said finding step includes the potential sink calculating a probability that the transmission rate from a sensor will fall below the desired rate owing to limitations of the channel between them.

9. The method according to claim 8 further comprising the potential sink calculating a distance related to said probability for each sensor, and a total distance for all the sensors within range, which it transmits to the current sink.

10. The method according to claim 8 or 9 wherein each sensor obtains the desired rate information on the basis of amounts of data to be transmitted and energy available to the sensor.

11. The method according to any preceding claim wherein the network further comprises a data delivery port, the method further comprising:

the candidate sink to which the role of current sink has been transferred finding a route to deliver its data to that delivery port by using other potential sinks as relays.

12. A wireless sensor network comprising sensors and an array of potential sinks, one of which is active as the current sink in the network, wherein:

each potential sink is arranged, when acting as the current sink, to select two or more other potential sinks as candidate sinks;
each potential sink is responsive to such selection to find its suitability to act as the sink using a calculation producing a result indicating its suitability for communication with a plurality of the sensors; and
the current sink is arranged to compare the result for each candidate sink to determine the most suitable candidate sink and to transfer the role of the current sink to the most suitable candidate sink thus found.

13. A sensor for use in a wireless sensor network comprising:

a wireless transceiver;
a sensor for sensing data;
a memory for temporarily holding data;
an energy source; and
desired rate calculating means for finding, based on an energy capacity of the energy source and an amount of data in the memory, a desired transmission rate for the transceiver.

**14.** A device for use as a potential sink in a wireless sensor network having sensors and provided with an array of potential sinks one of which acts as a current sink in the network, the device comprising:

wireless transceiver means for receiving and transmitting data within a communication range;

selecting means operable, when the potential sink is the current sink, to select as candidate sinks two or more other potential sinks within the communication range;

calculating means operable to provide a measure of the potential sink's suitability for communication with a plurality of the sensors, the transceiver means being arranged to transmit said measure to the current sink; and

decision means operable, when the potential sink is the current sink, to determine the most suitable candidate sink based on said measure.

Fig.1

*Fig.2*

Fig.3A

```
        ┌─────────────────────┐
        │    Current sink     │
        └─────────────────────┘
                   │
                   ▼
     ┌──────────────────────────────┐
     │  Select candidate sinks from │
     │    among potential sinks     │──── S10
     └──────────────────────────────┘
                   │
                   ▼
     ┌──────────────────────────────┐
     │ Find suitability of candidate│
     │     sinks by calculation     │──── S20
     └──────────────────────────────┘
                   │
                   ▼
     ┌──────────────────────────────┐
     │  Compare results for         │
     │       suitability            │──── S30
     └──────────────────────────────┘
                   │
                   ▼
     ┌──────────────────────────────┐
     │  Transfer role of sink to    │
     │   most suitable candidate    │──── S40
     └──────────────────────────────┘
                   │
                   ▼
```

*Fig.3B*

Fig.4

Fig.5

| | |
|---|---|
| o | Grid |
| ▽ | Inactive |
| × | Dead |
| ◯ | Active |
| ⊘ | Relay |
| + | G - Centre |
| ⭐ | Sink |

Fig.6

Fig.7

| | |
|---|---|
| ○ | Grid |
| ▽ | Inactive |
| × | Dead |
| ○ | Active |
| ⊘ | Relay |
| + | G - Centre |
| ✦ | Sink |

Fig.8

Fig.9

Fig.10A

Fig.10B

Fig.11A

| | |
|---|---|
| ○ | Grid |
| ▽ | Inactive |
| ✕ | Dead |
| ◯ | Active |
| ◉ | Relay |
| + | G - Centre |
| ☆ | Sink |

Fig.11B

*Fig.12A*

Events

distance

Throughput Based Grid

Centre

*Fig.12B*

*Fig.13A*

Fig.13B

**Europäisches Patentamt**
**European Patent Office**
**Office européen des brevets**

# EUROPEAN SEARCH REPORT

Application Number

EP 08 15 7966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/041052 A (NEC EUROP LTD [DE]; WESTHOFF DIRK [DE]; ARMKNECHT FREDERIK [DE]) 10 April 2008 (2008-04-10) * page 1, lines 1-6 * * page 2, lines 3-6 * * page 3, lines 1-12 * * page 4, lines 13-24 * * page 6, lines 13-27 * * page 7, lines 1-18 * * page 8, lines 8-13 * * claim 1 * * figure Fig. * ----- | 1-9,11, 12,14 | INV. H04L12/56 H04W84/18 ADD. H04W8/00 |
| X | YAN YAN ET AL: "Hierarchical Location Service for Large Scale Wireless Sensor Networks with Mobile Sinks" GLOBAL TELECOMMUNICATIONS CONFERENCE, 2007. GLOBECOM '07. IEEE, IEEE, PISCATAWAY, NJ, USA, 1 November 2007 (2007-11-01), pages 1222-1226, XP031196163 ISBN: 978-1-4244-1042-2 * page 1, left-hand column, lines 14-26 * * page 1, right-hand column, lines 6-25 * * page 2, left-hand column, lines 38-55 * * page 2, right-hand column, lines 5-30 * * page 3, left-hand column, lines 1-9 * * page 3, right-hand column, lines 24-37 * ----- | 1-9,11, 12,14 | TECHNICAL FIELDS SEARCHED (IPC) H04W H04L |
| X | WO 2008/032146 A (NOKIA CORP [FI]; NOKIA INC [US]; PALOHEIMO HARRI [FI]; NIEMINEN JOHANN) 20 March 2008 (2008-03-20) * paragraphs [0013] - [0015] * * paragraphs [0030] - [0034] * * paragraphs [0037], [0040] * * paragraphs [0060] - [0062] * * paragraphs [0068], [0078], [0091] * * figures 2,6-10 * ----- | 10,13 | |

The present search report has been drawn up for all claims

| Place of search | Date of completion of the search | Examiner |
|---|---|---|
| The Hague | 8 May 2009 | Puiulet, Alexandru |

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 15 7966

The Search Division considers that the present European patent application does not comply with the requirements of unity of invention and relates to several inventions or groups of inventions, namely:

1. claims: 1-9, 11, 12, 14

   The claims 1-9, 11, 12 and 14 are directed to selecting the best sink in a wireless sensor network. This is done by identifying the most suitable candidate sink among a set of candidate sinks and transferring to the most suitable candidate sink the role of the current active sink.
   ---

2. claims: 10, 13

   The claims 13 and 10 are directed to calculating the desired transmission rate based on the available resources at a sensor in a wireless sensor network. This is done by calculating the desired transmission rate based on the remaining source energy and the amount of data in the sensor memory.
   ---

**ANNEX TO THE EUROPEAN SEARCH REPORT
ON EUROPEAN PATENT APPLICATION NO.**

EP 08 15 7966

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2009

| Patent document cited in search report | Publication date | Patent family member(s) | Publication date |
|---|---|---|---|
| WO 2008041052    A | 10-04-2008 | NONE | |
| WO 2008032146    A | 20-03-2008 | NONE | |

EPO FORM P0459

For more details about this annex : see Official Journal of the European Patent Office, No. 12/82